# EUROPEAN PATENT SPECIFICATION

(11) **EP 0 242 152 B1**
(45) Date of publication and mention of the grant of the patent: **14.09.1994**
(21) Application number: 87303192.6
(22) Date of filing: 13.04.1987
(51) Int. Cl.: B29C 67/22, B29C 33/30, B68G 7/00

(54) **Method and apparatus for producing a seat cushion**
Verfahren und Vorrichtung zum Herstellen eines Sitzpolsters
Procédé et dispositif de fabrication d'un coussin de siège

(30) Priority: 12.04.1986 JP 84817/86
(43) Date of publication of application: 21.10.1987
(73) Proprietor: TOYO TIRE & RUBBER CO., LTD ., Nishi-ku, Osaka-shi, Osaka-fu (JP)
(72) Inventor: Yamazaki, Shinichi, Atsugi Kanagawa (JP); Kai, Yasuo, Ebina Kanagawa (JP)
(74) Representative: Carter, Caroline Ann

(56) References cited:
- FR-A- 2 335 330
- US-A- 3 534 129
- US-A- 4 544 126

## Description

This invention relates, to a method and apparatus for producing a seat cushion of a laminated structure made of foamed materials having a different hardness and more particularly relates to the production of a seat cushion of a laminated structure of high dimensional accuracy and high bond performance which enhance the durability and assure comfortable sitting on.

Heretofore, there have been known seat cushions made of a laminated structure of foamed materials having a different hardness, for example, a seat cushion made of foamed laminated materials having a different hardness in a lateral direction, i.e. a seat cushion having a different hardness between a center portion and side portions, or a sheet cushion made of foamed laminated materials having a different hardness in a vertical direction. The manufacturing processes for those seat cushions can be divided into two types, one type being a two-step process wherein a foamable liquid compound is integrally molded with a foamed material which has been cut into a desired shape, and the other being a one-step process wherein foamable liquid compounds of a different eventual hardness are expanded and made integral with each other.

Various processes have been proposed for manufacturing a cushion made by laminating or bonding foamed materials having a different hardness.

Japanese patent application laid open under No.58-209385 discloses a manufacturing process for a seat cushion made of foamed materials having a different hardness in a lateral direction, wherein at least two preformed cushioning materials are positioned in a mold while maintaining a space in the middle of the mold and a foamable material is poured, expanded and set up in the space.

Japanese patent application laid open under No.58-138622 discloses a process for increasing a hardness of an inner portion separated from a surface of a product by a given distance by setting an air-permeable impregnating material ,which has been cut into a desired shape, at a given position in a mold, pouring a foamable polyurethane into a lower mold and impregnating the foamable polyurethane into the impregnating material during expansion and setting up in a lower mold.

Japanese patent application laid open under No.58-203027 discloses a manufacturing process comprising dividing a mold cavity into two sections, i.e. a section for forming a soft portion of a product and a section for forming a hard portion of a product by a divider having an opening, pouring a foamable liquid material in a cavity for forming a soft portion and closing a mold and having a foamable liquid material passed through the opening into a cavity for forming a hard portion during expansion with forming uneven foams by restricting the growth of foams by means of turbulence of a foaming flow.

Japanese patent publication No.48-32108 discloses a seat cushion which can be easily manufactured by a process comprising pouring a foamable liquid plastic for forming a semirigid padding into a casting mold of a desired shape corresponding a product, setting a dividing element on a level of a foaming liquid, pouring thereon a foamable liquid plastic for forming a soft cushioning material and therby integrally bonding three elements to obtain a formed product.

Japanese patent application laid open under No.55-96195 discloses a foamed product manufactured by a process comprising pouring a first material for forming a hard foamed material in a mold, expanding the material by 10-80% of the potential expansion, pouring a second liquid material for forming a soft foamed material into a first material and closing a mold to expand and set up the materials.

Japanese patent application laid open under No.59-138423 discloses a foamed product and a method for producing the same comprising a hard foamed layer, a soft lower layer and a medium-density foamed side wall by using a process utilizing a difference of specific gravity between a first material for forming a hard foamed material and a second material for forming a soft foamed material and disposing a third material for forming a medium-density foamed material around the first material and then expanding the materials integrally.

Japanese patent application laid open under No. 58-501025 discloses a process for manufacturing a foamed polyurethane article including materials of a different hardness characterised in that a hard foamable compound is introduced directly on a soft foamed compound when the soft foamed compound cubically expands 100-2300% in a mold.

U.S. Patent No. 3 543 129 discloses a method for the production of a seat comprising a frame of rigid foamed material, an upholstery layer of a semi-rigid foamed material, and, if desired, a cushion of flexible foamed material. In accordance with the U.S. patent, the liquid foamable material for forming the rigid material is introduced into a mould and is foamed out completely, and the semi-rigid upholstery layer is formed on top of the fully foamed rigid layer. The cushion is then, if desired, moulded on top of the semi-rigid layer.

A seat cushion including materials of a different hardness manufactured by a two-step process enjoys high dimensional accuracy but the manufacturing process is complicated and the manufacturing cost is high. Besides, an impregnating layer is formed at the bonded surface between a foamed material and a foamable liquid compound, which impairs load deformation feeling required for a seat.

A seat cushion including materials of a different hardness manufactured by a one-step process is easy to manufacture but dimensional accuracy is inferior and the cushion is not comfortable to sit on.

There has been provided a structure which enhances a dimensional accuracy by interposing a film sheet between foamed materials of a different hardness but it still gives incompatibility at the time of deformation under load.

It is therefore an object of the present invention to provide a method for producing a seat cushion including materials of a different hardness whereby the poor dimensional accuracy that is a defect of one-step processes can be eliminated and a high dimensional accuracy can be obtained, and moreover a comfortable seating feeling can be obtained.

In accordance with the present invention, foamable liquid compounds only are used and a plurality of upper molds are used continuously and by turns, whereby a first foamable liquid compound is poured into a mold and a second foamable liquid compound is poured onto a first foam immediately before or after the end of tack-free time of a first foamable liquid compound.

The present invention provides a method for producing an article, especially a seat cushion, comprising a laminated structure comprising at least two foamed materials of differing hardness, each of the foamed materials having an impact resilience of at least 55% and the foamed material that, in use, is subjected to a force, in particular a deforming force, especially the material that will, in use, be uppermost, being softer than the other foamed material(s), which method comprises sequentially introducing into a mold which is at an elevated temperature at least two foamable liquid compositions for forming foamed materials of different densities from each other, the liquid composition introduced first being that for forming the material that will, in use, be subjected to a force, and each of the liquid compositions being of the high speed cure type, having a cream time of not longer than 7 seconds and a tack-free time of not longer than 150 seconds, the mold having a lower portion and a plurality of upper portions each of which can engage the lower portion about the periphery of the lower portion, the liquid compositions being introduced sequentially into the lower portion of the mold, and a respective upper portion being engaged with the lower portion after each liquid composition has been introduced, and the or each liquid composition after the first being introduced into the lower portion during the period from immediately before to immediately after the composition previously introduced becomes tack-free.

The invention further provides molding apparatus for forming an article, especially a seat cushion, comprising a laminated structure comprising at least two foamed materials of differing hardness, each of the foamed materials having an impact resilience of at least 55% and the foamed material that, in use, is subjected to a force, in particular a deforming force, especially the material that will, in use, be uppermost, being softer than the other foamed material(s), which apparatus comprises a mold provided with heating means, the mold comprising a lower mold portion having a flange about the periphery thereof, and at least two upper mold portions each hinged to the flange of the lower portion to permit the mold to be closed by each of the upper mold portions in turn, a peripheral portion of the lower mold portion and a peripheral portion of at least one of the upper mold portions being shaped such that, when the mold is closed by the said upper mold portion, there is a peripheral clearance of not more than 0.5 mm between the two mold portions, with a smooth parting face located outwardly of the clearance, and a sealing element, for preventing leakage between the lower mold portion and the said upper mold portion, located outwardly of the parting face.

In the following discussion, the mold portions are in general referred to as lower molds and upper molds.

An apparatus for manufacturing a seat cushion including materials of a different hardness to be used in execution of the above manufacturing process comprises a lower mold and upper mold which are connected for opening and closing action to at least two flanges of the lower mold e.g. by hinges, the upper molds being quickly exchanged by turns to form foamed materials of different hardness by turns.

Said molding equipment could be an aluminium molding mold of high thermal conductivity both in the lower mold and the upper mold and be equipped with a heating element which is a cast heating medium pipe, whereby a continuous, immediate heating to a desired temperature can be obtained.

The molding equipment would be equipped with four kinds of different upper molds at the maximum. It will ensure that a seat cushion made of foamed materials of different hardness can be manufactured with a wide range of variety in hardness, shape and so forth.

Preferably used for foamed materials in this manufacturing process is a foamable liquid compound (composition) which forms a high elastic polyurethane of a high speed cure type. Each foamable liquid compound is poured automatically by a pouring head under a heated condition at a temperature advantageously selected from the heat range of 50°C-100°C in accordance with a composition of foamable compound. A foamable compound to be laminated one by one is formed respectively by a corresponding upper mold. Immediately before or after the end of tack-free time of a foamable compound, a foamable compound to be laminated thereon is poured and formed by a corresponding upper mold. The uppermost foamable compound is set hard in a mold while keeping stable for a time corresponding to a tack-free time or more. Preferably, a foamable liquid compound is poured immediately after the end of tack-free time of a previously poured foamable liquid compound.

Thus, the present invention can provide a laminated foamed article having a high dimensional accuracy and integrally formed by an excellent intermolecular bond by using continuously and by turns a plurality of upper molds in connection with tack-free time.

In the drawings, which are given by way of example:
Fig. 1 represents an end view in section taken along a center line of a seat cushion including materials of different hardness manufactured in accordance with the present invention,
Fig. 2 represents a perspective view of a seat cushion broken away along a center line,
Fig. 3 (a) represents a sectional view taken along X-X in Fig. 1,
Fig. 3 (b) represents a sectional view taken along Y-Y in Fig. 1,
Fig. 3 (c) represents a sectional view taken along Z-Z in Fig. 1,
Fig. 4 represents a sectional view of a mold used with a manufacturing process in accordance with the present invention,
Fig. 5 represents a sectional view corresponding to Fig. 1 showing the stage of forming a soft foamed material,
Fig. 6 represents a sectional view of a mold showing the stage of pouring a hard foamed material onto the soft foamed material,
Fig. 7 represents a sectional view of a mold ,with an upper mold closed for forming a hard material,
Fig. 8 represents a sectional view of a mold showing the stage wherein foamed materials are integrally set hard and upper molds are opend,
Fig. 9 represents a partially enlarged view of a mold with an upper mold closed on a lower mold for forming a soft foamed material,
Fig. 10 represents a partially enlarged view of a mold with an upper mold closed on a lower mold for forming a hard foamed material.

In the drawings, reference numeral 1 indicates a soft foamed material, 2 is a hard foamed material, SF shows a seating for sitting, SS is a seat side rest positioned on both sides of the seating. The seat side rest SS is formed to protrude so that both soft foamed material and hard foamed material are formed to protrude along the side seat as shown in Fig. 3. The hard foamed material 2 is formed to protrude within the soft foamed material 1. Numeral 3 denotes a seating stability groove formed at the soft foamed material 1 at about a center portion of the seating SF. 5 indicates a seating stability groove which is formed between the seating SF and the seat side rest SS.

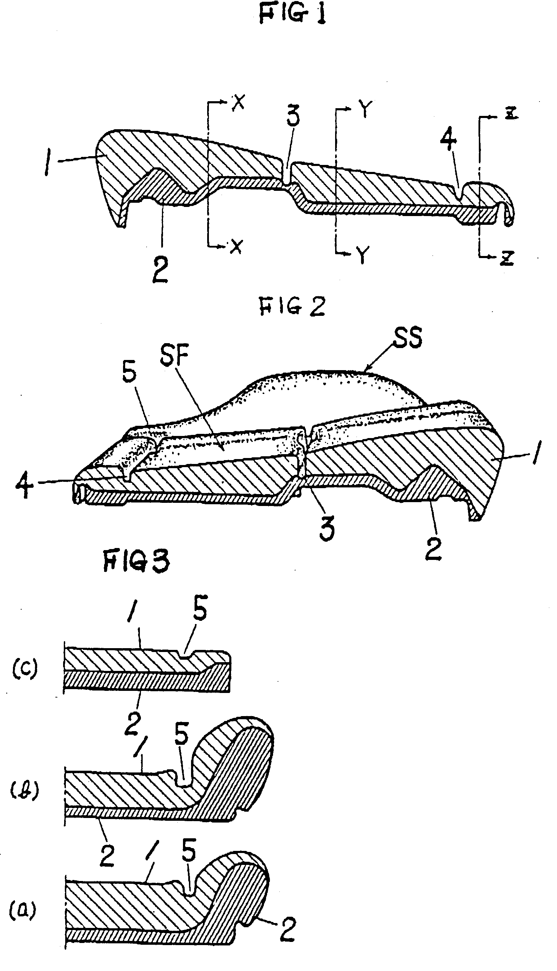

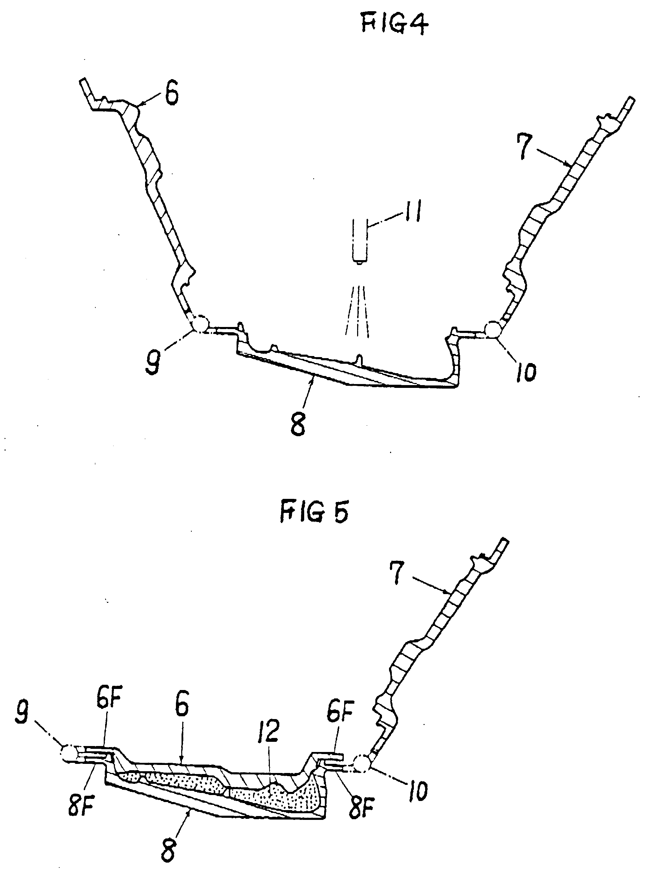

In Fig. 4 showing an example of a mold for forming a seat cushion shown in Figs. 1 and 2, reference numeral 6 shows an upper mold for forming the soft foamed material 1, 7 indicates an upper mold for forming the hard foamed material 2, 8 denotes a lower mold, and 9 and 10 represent hinges which permit a quick opening and closing action of the upper molds 6,7 onto the lower mold 8. The opening and closing action of the upper molds is automatically made by a hydraulic device.

As for the material for the mold, aluminium is preferable in view of its light weight and chemical stability, because the upper molds shall be quickly and frequently opened and closed in connection with the lower molds.

Various heating systems could be employed to heat the mold. Among them, it is preferable to cast a heating medium pipe when the aluminium mold is cast. The aluminium mold has a high thermal conductivity and can be heated immediately and evenly to a desired temperature by the heating medium of the pipe, and the regulation of the temperature is easily and precisely made.

For a high speed setting up of the foamable liquid compound, a mold temperature is normally set in the range of 50°C-100°C. At a temperature lower than 50°C, a surface contacted with the mold sets hard too slowly and in case of a temperature higher than 100°C, the surface of the material sets hard too quickly, to obtain an excellent forming.

Table 1 represents an example of foamable polyurethane compound for forming the soft foamed material and the hard foamed material of different hardness.

Polymer materials are EP-3033 of Mitsui Toatsu (PPG-viscosity 1000 cP, OH value 33, molecular weight about 6400) and POP 31-28 (20% acrylonitrile graft PPG-viscosity 3000 cP, OH value 28, molecular weight about 6000).

**Table 1**

| | Soft foamed material | Hard foamed material |
|---|---|---|
| | (parts by weight) | |
| EP-3033 | 60 | 60 |
| POP 31-28 | 40 | 40 |
| silicone surfactant | 1.0 | 1.0 |
| water | 3.3 | 2.5 |
| *DABCO 33 LV | 0.5 | 0.5 |
| diethanolamine | 1.0 | 1.5 |
| *TDI - INDEX | | |
| (TDI 2,4/2,6=80/20) | 100 | 115 |
| Cf. DABCO 33 LV: dipropylene glycol (DPG) solution of triethylenediamine (TEDA) of Sankyo Aepro TDI: tolylene diisocyanate EP-3033, POP 31-28 and DABCO 33 LV are trade marks. | | |

Table 2 represents properties of the materials and foam properties.

**Table 2**

| | Soft foamed material | Hard foamed material |
|---|---|---|
| | (parts by weight) | |
| foam density (g/cm²) (OAD) | 0.045-0.055 | 0.050-0.065 |
| 25% hardness (kg/200mm⌀) | 8-12 | 16-25 |
| Impact resilience(%) | 60 | 55-60 |
| cream time (sec.) | 3-7 | 3-7 |
| rise time (sec.) | 50-90 | 50-90 |
| tack-free time (sec.) | 120-150 | 120-150 |
| Cf. OAD: over-all density | | |

Forming process will now be set forth using the above compounds.

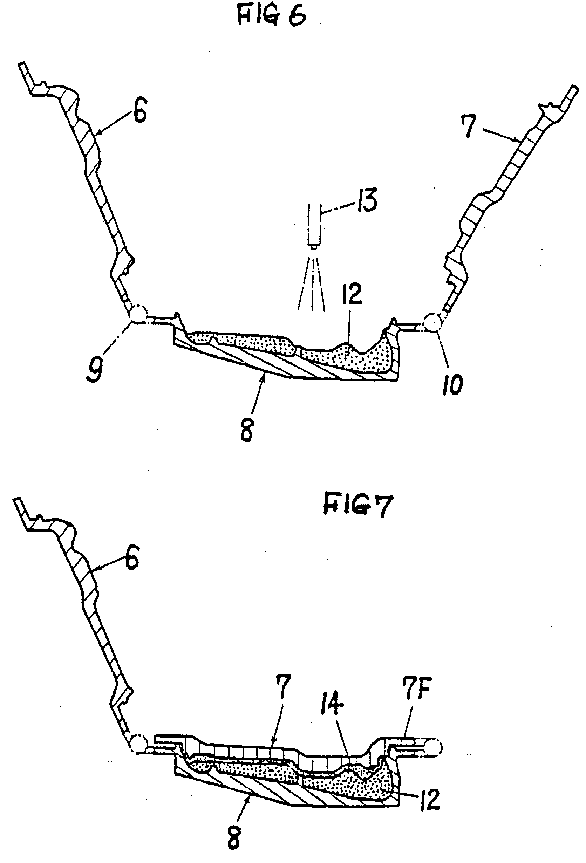

The mold shown in Fig. 4 is heated to 65°C by a heating medium and kept at this temperature. Opening the upper molds, a foamable compound for a soft material is poured onto the lower mold 8. A desired quantity of foamable compound shall be poured evenly in seconds and so the pouring is conducted by a pouring head 11 which is preferably automatically controlled, for example, by a robot. Then, the upper mold 6 for a soft material is closed as shown in Fig. 5. Immediately after the end of tack-free time, the upper mold 6 is opened and then over the soft foamed material 12 a hard foamable compound is poured preferably automatically by a pouring head 13 controlled, for example, by a robot. Then, the upper mold 7 is closed as shown in Fig. 7. After expanding, the upper mold is kept closed for setting up. Then, the upper mold 7 is opened as shown in Fig. 8 to take out an integrally formed laminated product of a soft foamed material and a hard foamed material.

Explained above is a laminated structure of two layers wherein a difference of hardness is not large. In case of a laminated structure of three layers having a large difference of hardness, three upper molds shall be employed. In this case, immediately before or after the end of tack-free time of foamable liquid compounds for a second layer of three, a foamable liquid compound for a third layer is poured to form an integral foamed product. A pouring of a foamable liquid compound for a third layer is preferable immediately after the end of tack-free time of the two layers.

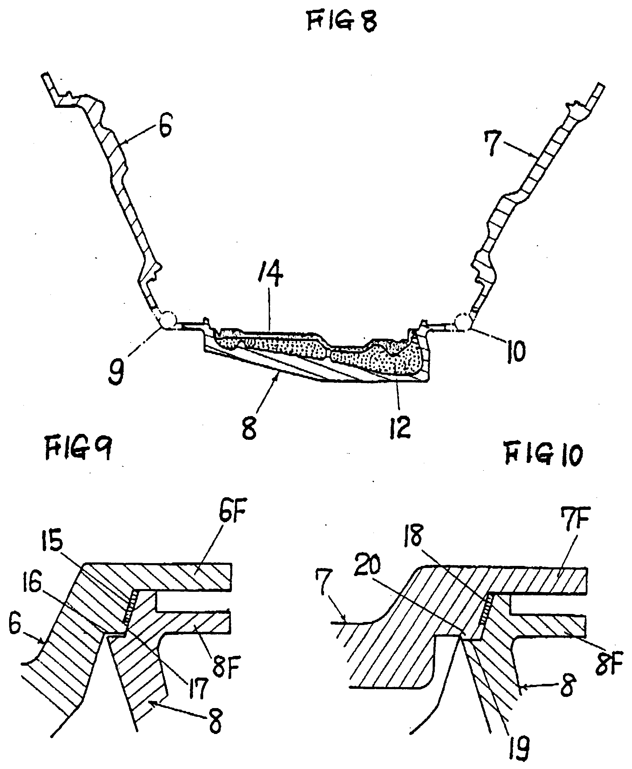

Shown in Fig. 9 is for explanation of a clearance formed at the flange portion when the upper mold 6 is closed on the lower mold 8. 6F indicates a flange of the upper mold 6 for forming a soft material. 8F is a flange of the lower mold 8. Shown by 15 is a sealing element provided at the upper mold 6 and 16 indicates a clearance formed between the upper mold and the lower mold. A parting face 17 shall be completely smooth to ensure zero seal. The clearance shall advantageously be not more than 0.5 mm and more preferably not more than 0.3mm. Said clearance 16 is to form a flash of not more than 0.5mm thickness along the periphery of a parting line of the mold when a foamable polyurethane liquid compound for a soft foamed material 12 is poured into the lower mold and expanded. Said flash prevents a foamable polyurethane liquid compound for forming a hard foamed material 14 from flowing into a soft foamed material 12 along the edge of the mold when said hard foamable compound is poured on the soft foamable compound, so that an excellent product is obtained.

In case said clearance 16 is more than 0.5 mm, there occurs a collapse in the soft foamable material 12 owing to the occurrence of flowing. If the clearance is substantially zero, a desired flash cannot always be expected, and a loss of quality is increased.

Shown in Fig. 10 is a flange portion when the upper mold 7 for a hard foamable material is closed on the lower mold 8. 7F indicates a flange of the upper mold 7. 18 is a sealing element provided on the upper mold 7. Denoted by 19 is a parting face of the upper mold 7 and the lower mold 8 which is designed so as not to create a clearance and designed to make zero sealing.

Because of the flash 20 formed at the first stage is clamped in the parting face 19 when the upper mold 7 for forming a hard foamed material is closed, a foamable polyurethane liquid compound is prevented from flowing into a soft foamed material 12 along the edge of the mold.

According to the present invention, a soft foamed material is integrally formed with a hard foamed material immediately before or after the end of tack-free time of a preferably soft, foamed material by quickly exchanging a plurality of upper molds, so that a strong intermolecular bonding is easily obtained between a soft foamed material and a hard foamed material. Besides, a high dimensional accuracy is obtained to manufacture an excellent product. Increasing the number of upper molds makes it possible to provide various types of product e.g. in hardness, shape and so forth. Mixing of a soft foamed material with a hard foamed material is prevented. As a result, a seat cushion made of foamed materials of different hardness obtained enjoys excellent properties as regards load deformation, feel, and durability.

## Claims

1. A method for producing an article, especially a seat cushion, comprising a laminated structure comprising at least two foamed materials of differing hardness, each of the foamed materials having an impact resilience of at least 55% and the foamed material that, in use, is subjected to a force, especially the material that will, in use, be uppermost, being softer than the other foamed material(s), which method comprises sequentially introducing into a mold which is at an elevated temperature at least two foamable liquid compositions for forming foamed materials of different densities from each other, the liquid composition introduced first being that for forming the material that will, in use, be subjected to a force, and each of the liquid compositions being of the high speed cure type, having a cream time of not longer than 7 seconds and a tack-free time of not longer than 150 seconds, the mold having a lower portion and a plurality of upper portions each of which can engage the lower portion about the periphery of the lower portion, the liquid compositions being introduced sequentially into the lower portion of the mold, and a respective upper portion being engaged with the lower portion after each liquid composition has been introduced, and the or each liquid composition after the first being introduced into the lower portion during the period from immediately before to immediately after the composition previously introduced becomes tack-free.

2. A method as claimed in claim 1, wherein each foamable liquid composition for forming a foamed mass onto which a further foamable liquid composition is to be poured forms a flash having a thickness of not more than 0.5 mm to prevent foamable compositions for forming foamed materials of different hardness from mixing with each other.

3. A method as claimed in claim 1 or claim 2, wherein each of the foamable liquid compositions is a composition for forming a foamed polyurethane.

4. A method as claimed in any one of claims 1 to 3, wherein the mold is maintained at a temperature of from 50 to 100°C.

5. Molding apparatus for forming an article, especially a seat cushion, comprising a laminated structure comprising at least two foamed materials of differing hardness, each of the foamed materials having an impact resilience of at least 55% and the foamed material that, in use, is subjected to a force, especially the material that will, in use, be uppermost, being softer than the other foamed material(s), which apparatus comprises a mold provided with heating means, the mold comprising a lower mold portion having a flange about the periphery thereof, and at least two upper mold portions each hinged to the flange of the lower portion to permit the mold to be closed by each of the upper mold portions in turn, a peripheral portion of the lower mold portion and a peripheral portion of at least one of the upper mold portions being shaped such that, when the mold is closed by the said upper mold portion, there is a peripheral clearance of not more than 0.5 mm between the two mold portions, with a smooth parting face located outwardly of the clearance, and a sealing element, for preventing leakage between the lower mold portion and the said upper mold portion, located outwardly of the parting face.

6. Apparatus as claimed in claim 5, wherein the lower mold portion and the upper mold portions comprise aluminium, and the heating means comprises a cast pipe for a heating medium.

## Patentansprüche

1. Verfahren zur Herstellung eines Gegenstandes, insbesondere eines Sitzkissens, enthaltend eine Schichtstruktur, die wenigstens zwei geschäumte Materialien verschiedener Härte enthält, wobei jedes der geschäumten Materialien eine Rückprallelastizität von wenigstens 55% aufweist und dasjenige geschäumte Material, welches in Gebrauch einer Kraft ausgesetzt wird, insbesondere dasjenige Material, das in Gebrauch am weitesten oben liegt, weicher ist als das andere geschäumte Material oder die anderen geschäumten Materialien, dadurch gekennzeichnet, daß nacheinander in eine sich auf erhöhter Temperatur befindliche Form wenigstens zwei aufschäumbare flüssige Zusammensetzungen für die Bildung der geschäumten Materialien von untereinander unterschiedlicher Dichten eingebracht werden, wobei die zuerst eingebrachte flüssige Zusammensetzung diejenige zur Bildung des Materials ist, welches in Gebrauch einer Kraft ausgesetzt wird und wobei jede der flüssigen Zusammensetzungen vom schnellhärtenden Typ sind, die eine Aufrahmzeit von nicht mehr als 7 Sekunden und eine Zeit bis zum Nichtklebrigwerden von nicht mehr als 150 Sekunden aufweisen, die Form einen unteren Teil und mehrere obere Teile aufweist, von denen jedes den unteren Teil um dessen Umfang herum ergreifen kann, die flüssigen Zusammensetzungen nacheinander in den unteren Teil der Form eingeführt werden und ein entsprechender oberer Teil mit dem unteren Teil in Eingriff gebracht wird, nachdem jede flüssige Zusammensetzung eingebracht worden ist und die oder jede flüssige Zusammensetzung nach der ersten in den unteren Teil während des Zeitraums eingeführt wird, der von unmittelbar vor bis unmittelbar nach dem Nichtklebrigwerden der vorher eingeführten Zusammensetzung reicht.

2. Verfahren nach Anspruch 1, worin jede aufschäumbare flüssige Zusammensetzung zur Bildung einer geschäumten Masse, auf die eine weitere aufschäumbare Zusammensetzung gegossen werden soll, einen Grat einer Dicke von nicht mehr als 0,5 mm bildet, um zu verhindern, daß sich aufschäumbare Zusammensetzungen zur Bildung geschäumter Materialien unterschiedlicher Härte miteinander vermischen.

3. Verfahren nach Anspruch 1 oder 2, worin jede der schäumbaren flüssigen Zusammensetzungen ein geschäumtes Polyurethan bildet.

4. Verfahren nach einem der Ansprüche 1 bis 3, worin die Form bei einer Temperatur von 50 bis 100°C gehalten wird.

5. Formvorrichtung für die Formung eines Gegenstandes, insbesondere eines Sitzkissens, enthaltend eine Schichtstruktur, die wenigstens zwei geschäumte Materialien unterschiedlicher Härte enthält, wobei jedes der geschäumten Materialien eine Rückprallelastizität von wenigstens 55% aufweist und dasjenige geschäumte Material, das in Gebrauch einer Kraft unterworfen wird, insbesondere das Material, das in Gebrauch das am weitesten oben liegende ist, weicher ist als das andere geschäumte Material oder die anderen geschäumten Materialien, dadurch gekennzeichnet, daß die Vorrichtung eine mit Heizeinrichtungen versehene Form aufweist, die Form einen unteren Teil mit einem Flansch um ihren Umfang und wenigstens 2 obere Formteile, die beide an den Flansch des unteren Teils angelenkt sind, aufweist, damit die Form abwechselnd durch jedes der oberen Formteile verschlossen werden kann, wobei ein peripherer Teil des unteren Formteils und ein peripherer Teil wenigstens eines der oberen Formteile derart geformt ist, daß, wenn die Form durch die genannten oberen Formteile verschlossen ist, ein peripherer Spalt von nicht mehr als 0,5 mm zwischen den zwei Formteilen entsteht, mit einer glatten Trennfläche, die vom Spalte nach außen gerichtet liegt, und einem von der Trennfläche nach außen gerichtet gelegenen Verschlußelement zur Verhinderung von Leckage zwischen unterem Formteil und dem genannten oberen Formteil.

6. Vorrichtung nach Anspruch 5, worin der untere Formteil und die oberen Formteile Aluminium enthalten und die Heizeinrichtungen ein gegossenes Rohr für ein Heizmedium enthalten.

## Revendications

1. Procédé de production d'un article, en particulier d'un coussin de siège, comprenant une structure stratifiée comprenant au moins deux matières expansées de duretés différentes, la résilience à l'impact de chacune des matières expansées étant d'au moins 55% et la matière expansée qui est soumise à une force en utilisation, en particulier la matière qui en utilisation est la plus haute, étant plus souple que l'autre ou les autres matières expansées, procédé qui comprend en séquence les étapes consistant à: introduire dans un moule qui est à une température élevée au moins deux compositions liquides expansibles afin de former des matières expansées de densités différentes l'une de l'autre, la composition liquide introduite en premier étant celle qui sert à former la matière qui sera soumise en utilisation à une force , et chacune des compositions liquides étant du type à réticulation à haute vitesse, ayant un temps de crémage non supérieur à 7 secondes et un temps de non poissage non supérieur à 150 secondes, le moule comportant une partie inférieure et une série de parties supérieures qui peuvent chacune venir en prise avec la partie inférieure autour de la périphérie de la partie inférieure, les compositions liquides étant introduites en séquences dans la partie inférieure du moule, et une partie respective supérieure venant en prise avec la partie inférieure lorsque chaque composition liquide a été introduite, et la composition liquide, ou chacune d'elles, après la première étant introduite dans la partie inférieure pendant la période limitée par l'instant qui précède immédiatement, et celui qui suit immédiatement, l'instant où la composition précédemment introduite devient non poisseuse.

2. Procédé selon la revendication 1, dans lequel chaque composition liquide expansible, qui sert à former une masse expansée sur laquelle une autre composition liquide expansible doit être versée, forme un voile dont l'épaisseur ne dépasse pas 0,5 mm pour éviter à des compositions expansibles de former des matières expansées de duretés différentes en se mélangeant entre elles.

3. Procédé selon la revendication 1 ou la revendication 2, dans lequel chacune des compositions liquides expansibles est une composition servant à former un polyuréthanne expansé.

4. Procédé selon l'une quelconque des revendications 1 à 3, dans lequel le moule est maintenu à une température comprise entre 50 et 100°C.

5. Appareil de moulage servant à former un article, en particulier un coussin de siège, comprenant une structure stratifiée comprenant au moins deux matières expansées de duretés différentes, la résilience à l'impact de chacune des matières expansées étant d'au moins 55% et la matière expansée qui est soumise à une force en utilisation, en particulier la matière qui en utilisation est la plus haute, étant plus souple que l'autre ou les autres matières expansées, appareil qui comprend un moule pourvu d'un moyen de chauffage, le moule comprenant une partie inférieure de moule pourvue d'une bride autour de sa périphérie, et au moins deux parties supérieures de moule montées chacune à charnière sur la bride de la partie inférieure afin de permettre au moule d'être fermé au fur et à mesure par chacune des parties supérieures de moule, une partie périphérique de la partie inférieure de moule et une partie périphérique d'au moins l'une des parties supérieures de moule étant configurée d'une manière telle qu'il existe entre les deux parties de moule un jeu périphérique ne dépassant pas 0,5 mm lorsque le moule est fermé par ladite partie supérieure de moule, une face de séparation lisse étant située à l'extérieur du jeu, et un élément d'étanchéité, qui sert à empêcher des fuites entre la partie inférieure de moule et ladite partie supérieure de moule, étant situé à l'extérieur de la face de séparation.

6. Appareil selon la revendication 5, dans laquelle la partie inférieure de moule et les parties supérieures de moule comprennent de l'aluminium, et le moyen de chauffage comprend un tube coulé prévu pour un milieu chauffant.
